# EUROPEAN PATENT SPECIFICATION

(11) **EP 2 168 664 B1**
(45) Date of publication and mention of the grant of the patent: **14.02.2018**
(21) Application number: 08748572.8
(22) Date of filing: 15.05.2008
(51) Int. Cl.: B01D 63/02, C02F 1/44

(54) **SUBMERGIBLE HOLLOW-FIBRE MEMBRANE MODULE**
HOHLFASERMEMBRANTAUCHMODUL
MODULE DE MEMBRANES À FIBRES CREUSES SUBMERSIBLE

(30) Priority: 18.05.2007 CN 200720069950 U
(43) Date of publication of application: 31.03.2010
(73) Proprietor: Shanghai Litree Purifying Equipment Co., Ltd., Shanghai 200433 (CN)
(72) Inventor: CHEN, Lianggang, Shanghai 200433 (CN); CHEN, Man, Shanghai 200433 (CN); CHEN, Qing, Shanghai 200433 (CN)
(74) Representative: Gevers & Orès
(86) International application number: PCT/CN2008/070966
(87) International publication number: WO 2008/141568

(56) References cited:
- WO-A1-00/25897
- WO-A1-2006/137671
- CN-Y- 2 608 491
- JP-A- 7 185 268
- JP-A- 62 250 908
- US-A- 4 876 006
- US-A1- 2003 075 504

## Description

### Technical Field

The invention relates to a filtering equipment, in particular to a shaft type submerged hollow fiber membrane module. The invention also relates to a filter comprising the shaft type submerged hollow fiber membrane module.

### Background Art

Background art includes at least US-A1-4,876,006, JP-A-07 185268 and US-A1-2003/075504.

Hollow fiber membrane has been widely used in water treatment, biological separation, air filtration and the like. A typical structural arrangement of a hollow fiber membrane module involves a bundle of hollow fiber membranes which are provided in a pressure bearing shell and then fixed at the ends of the bundle. The containment of a bundle of membranes in a shell via such a direct way tends to result in knotting and fouling-up of the fiber membranes, a small throughput of the outcoming water, and a short life of the membrane module.

Thus, the directly fixed membrane module has been modified by various methods, wherein the membrane bundle is covered with a reticular protection layer according to one method, or the membranes are divided into several bundles using partition plates according to another method. Despite some protection they provide for the membranes, these methods still tend to impair the membrane bundle, break the membrane filaments, and suffer from low filtration efficiency, with the problems of water stream distribution and produced-water collection left unsolved. In particular, the problems are more serious when the diameter and the length of the membrane module are relatively large.

With respect to such problems, it is conceived that a water distributing device is provided to the end of the membrane bundle to distribute water decentrally, and the water distributor, the membrane bundle and the shell are adhered and fixed together. However, non-uniform distribution of water still occurs and the unit cost is increased.

So far, a hollow fiber membrane module, the advantages of which include a reasonable structure, reasonable and highly efficient water stream distribution and produced-water collection, enhanced utility efficiency of hollow membrane filaments, high filtering efficiency, high throughput of outcoming water, long life and low unit cost, has not been available in this field.

Therefore, a hollow fiber membrane module, the advantages of which include a reasonable structure, reasonable and highly efficient water stream distribution and produced-water collection, enhanced utility efficiency of hollow membrane filaments, high filtering efficiency, high throughput of outcoming water, long life and low unit cost, is in urgent need in this field.

### Summary of the Invention

The invention provides a new hollow fiber membrane module, the advantages of which include a reasonable structure, reasonable and highly efficient water stream distribution and produced-water collection, enhanced utility efficiency of hollow membrane filaments, high filtering efficiency, high throughput of outcoming water, long life and low unit cost, so that the existing problems in the field are solved. According the invention, there is provided a shaft type submerged hollow fiber membrane module as recited in claim 1.

In a preferred embodiment, the hollow aerating shaft, opened at one or both ends, is disposed along the central axis of the membrane module.

In another preferred embodiment, when there are two or more aerating heads, one of them is disposed around the hollow aerating shaft, facing the exposed part of the hollow membrane filaments near the lower end head, and the rest are distributed along the hollow aerating shaft at a constant spacing.

In another preferred embodiment, the aerating head has a shape of central annulus with two or more radial aerating branch tubes disposed thereon; and the peripheral size of the aerating head is equivalent to the outer diameter of the top or lower end head.

In another preferred embodiment, there is only one produced-water communicating tube which is provided directly outside the hollow aerating shaft to be in coaxial; and when there are more produced-water communicating tubes, one of them is provided outside the hollow aerating shaft, and the rest are distributed uniformly around the hollow aerating shaft, or all of them are distributed uniformly around the hollow aerating shaft.

In another preferred embodiment, the two ends of the hollow fiber membrane are fixed on the upper end head and the lower end head, respectively, and the hollow channel of the hollow fiber membrane is open at both ends.

In another preferred embodiment, the protective net has a grid of over 50 meshes; and the protective net is made of a material selected from the group consisting of metallic material, inorganic material and organic material.

In another preferred embodiment, the protective net is made of a material selected from the group consisting of stainless steel, nitrilon, nylon and ceramic.

In another aspect of the invention, there is provided a filter comprising the shaft type submerged hollow fiber membrane module.

### Brief Description of the Drawings

Fig. 1 is a schematic view of a shaft type submerged hollow fiber membrane module having produced-water communicating tubes according to one embodiment of the invention.
Fig. 2 shows the case wherein the produced-water communicating tube according to the embodiment shown in Fig. 1 is arranged eccentrically with respect to the hollow aerating shaft.
Fig. 3 shows the case wherein the produced-water communicating tubes according to the embodiment shown in Fig. 1 are arranged symmetrically with respect to the hollow aerating shaft.
Fig. 4 shows the case wherein the produced-water communicating tube according to the embodiment shown in Fig. 1 is arranged coaxially with respect to the hollow aerating shaft.
Fig. 5 shows the case wherein the produced-water communicating tubes according to the embodiment shown in Fig. 1 are arranged uniformly around the hollow aerating shaft.

### Detailed Description of the Invention

After extensive and intensive research, the inventors have found that the use of the particular configuration according to the invention can provide a hollow fiber membrane module, the advantages of which include a reasonable structure, reasonable and highly efficient water stream distribution and produced-water collection, enhanced utility efficiency of hollow membrane filaments, high filtering efficiency, high throughput of outcoming water, long life and low unit cost.

In one aspect of the invention, there is provided a shaft type submerged hollow fiber membrane module, comprising a hollow aerating shaft 1, an aerating head 2, hollow fiber membranes 4, an upper end head 5, a lower end head 6, an upper end cap 7, a lower end cap 8, a water-producing opening 9, an aerating gas inlet 10, a protective net 11 and adhesive material 12, wherein the hollow fiber membranes 4, the hollow aerating shaft 1, the upper end head 5, the lower end head 6 and the adhesive material 12 are fixed together; the aerating head 2, the number of which is at least one, is connected to the hollow aerating shaft 1; the water-producing opening 9 is disposed at the top and/or the bottom of the membrane module; the aerating gas inlet 10 is disposed at one or both ends of the hollow aerating shaft 1; and the protective net 11 covers the periphery of the membrane module. According to the invention, the membrane module may further comprise a produced-water communicating tube 3, wherein the produced-water communicating tube 3, the hollow fiber membranes 4, the hollow aerating shaft 1, the upper end head 5, the lower end head 6 and the adhesive material 12 are fixed together.

In another preferred embodiment of the invention, the hollow aerating shaft 1, opened at one or both ends, may be disposed along the central axis of the membrane module.

In another preferred embodiment of the invention, when there is only one aerating head 2, it is disposed around the hollow aerating shaft 1, facing the exposed part of the hollow membrane filaments near the lower end head 6; when there are two or more aerating heads 2, one of them may be disposed around the hollow aerating shaft 1, facing the exposed part of the hollow membrane filaments near the lower end head 6, and the rest may be distributed along the hollow aerating shaft 1 at a constant spacing.

In another preferred embodiment of the invention, the aerating head 2 may have a shape of central annulus with two or more radial aerating branch tubes disposed thereon; and the peripheral size of the aerating head 2 is equivalent to the outer diameter of the upper end head 5 or the lower end head 6.

In another preferred embodiment of the invention, there may be one or more produced-water communicating tubes 3 which may be opened at both ends, wherein when there is only one produced-water communicating tube 3, it may be provided directly outside the hollow aerating shaft 1 to be in coaxial; and when there are more produced-water communicating tubes 3, one of them may be provided outside the hollow aerating shaft 1, and the rest may be distributed uniformly around the hollow aerating shaft 1, or all of them may be distributed uniformly around the hollow aerating shaft 1.

In another preferred embodiment of the invention, the two ends of the hollow fiber membrane 4 may be fixed on the upper end head 5 and the lower end head 6, respectively, and the hollow channel of the hollow fiber membrane 4 may be open at both ends. According to the invention, the protective net 11 covers the periphery of the membrane module and thus separates the hollow fiber membrane 4 from outside; the protective net 11 has a grid of over 50 meshes; and the protective net 11 is made of a material selected from the group consisting of metallic material, inorganic material and organic material.

In another preferred embodiment of the invention, the protective net 11 is made of a material selected from the group consisting of stainless steel, nitrilon, nylon and ceramic.

In another aspect of the invention, there is provided a filter comprising the shaft type submerged hollow fiber membrane module.

Further description of the invention will be made with reference to the accompanied drawings. However, it is to be understood that they are only used for the purpose of illustrating the invention without limiting the scope thereof.

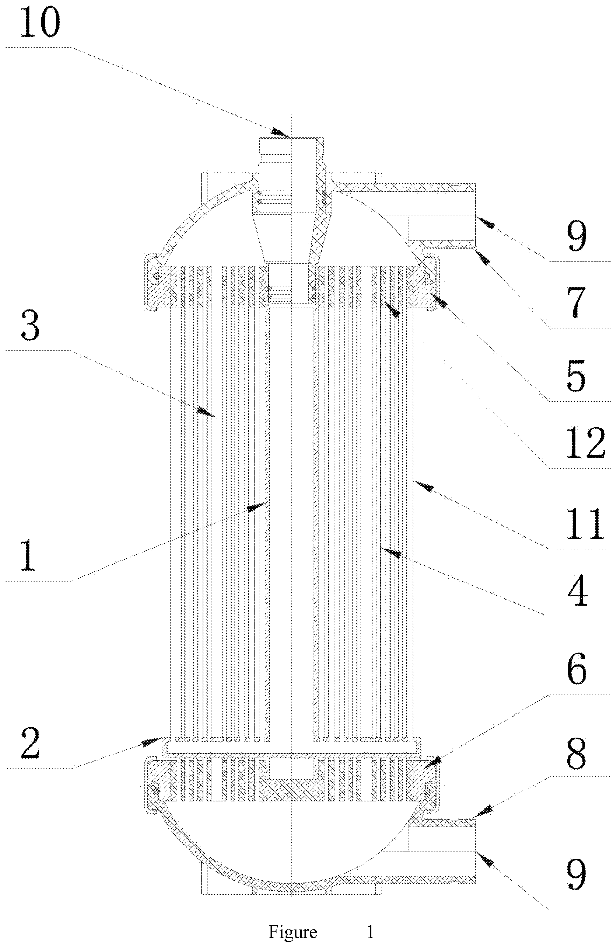

Fig. 1 shows a shaft type submerged hollow fiber membrane module having produced-water communicating tubes 3 according to one embodiment of the invention. As shown in Fig. 1, the hollow fiber membrane module is a substantially cylindrical structure comprising a hollow aerating shaft 1, an aerating head 2 connected to the hollow aerating shaft 1, produced-water communicating tubes 3, hollow fiber membranes 4, an upper end head 5, a lower end head 6, an upper end cap 7, a lower end cap 8, water producing openings 9 disposed at the top and bottom ends of the membrane module, respectively, an aerating gas inlet 10 disposed on the hollow aerating shaft 1, a protective net 11 covering the periphery of the membrane module and adhesive material 12. The produced-water communicating tubes 3, the hollow fiber membranes 4, the hollow aerating shaft 1, the upper end head 5, the lower end head 6, and the adhesive material 12 are fixed together. The hollow aerating shaft 1, opened at one or both ends, is disposed along the central axis of the membrane module. The aerating head 2 is disposed around the hollow aerating shaft 1, facing the exposed part of the hollow membrane filaments near the lower end head 6. The aerating head 2 may have a shape of central annulus with two or more radial aerating branch tubes (not shown) disposed thereon; and the peripheral size of the aerating head 2 is equivalent to the outer diameter of the upper end head 5 or the lower end head 6. There may be one or more produced-water communicating tubes 3 which may be opened at both ends. The two ends of the hollow fiber membrane 4 may be fixed on the upper end head 5 and the lower end head 6, respectively, and the hollow channel of the hollow fiber membrane 4 is open at both ends. The protective net 11 covers the periphery of the membrane module and thus separates the hollow fiber membrane 4 from outside; the protective net 11 has a grid of over 50 meshes; and the protective net 11 is made of a material selected from the group consisting of metallic material, inorganic material, organic material and the like, preferably from the group consisting of stainless steel, nitrilon, nylon, ceramic and the like.

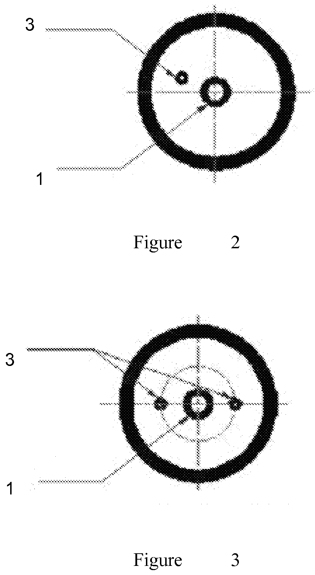

Fig. 2 shows the case wherein the produced-water communicating tube 3 according to the embodiment shown in Fig. 1 is arranged eccentrically with respect to the hollow aerating shaft 1. As shown in Fig. 2, the produced-water communicating tube 3 is arranged eccentrically at one side of the hollow aerating shaft 1.

Fig. 3 shows the case wherein the produced-water communicating tubes 3 according to the embodiment shown in Fig. 1 are arranged symmetrically with respect to the hollow aerating shaft 1. As shown in Fig. 3, the produced-water communicating tubes 3 are arranged symmetrically at two sides of the hollow aerating shaft 1.

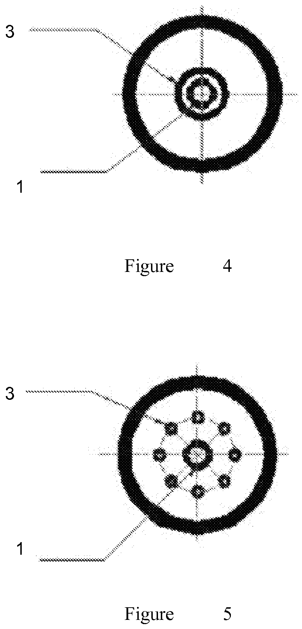

Fig. 4 shows the case wherein the produced-water communicating tube 3 according to the embodiment shown in Fig. 1 is arranged coaxially with respect to the hollow aerating shaft 1. As shown in Fig. 4, the produced-water communicating tube 3 is arranged coaxially with respect to the hollow aerating shaft 1.

Fig. 5 shows the case wherein the produced-water communicating tubes 3 according to the embodiment shown in Fig. 1 are arranged uniformly around the hollow aerating shaft 1. As shown in Fig. 5, the produced-water communicating tubes 3 are arranged uniformly around the hollow aerating shaft 1.

The main advantages of the invention include:
The shaft type submerged hollow fiber membrane module has a reasonable structure, reasonable and highly efficient water stream distribution and produced-water collection, enhanced utility efficiency of hollow membrane filaments, high filtering efficiency, high throughput of outcoming water, long life and low unit cost, and it is thus quite suited to be used directly in turbid water source.

## Claims

1. A shaft type submergible hollow fiber membrane module, said membrane module having a cylindrical structure and comprising a hollow aerating shaft (1), an aerating head (2), hollow fiber membranes (4), an upper end head (5), a lower end head (6), an upper end cap (7), a lower end cap (8), a water-producing opening (9), an aerating gas inlet (10), a protective net (11) and adhesive material (12); there is only one aerating head (2) which is disposed around the hollow aerating shaft (1), facing the exposed part of the hollow membrane filaments near the lower end head (6); the water-producing opening (9) is disposed at the top and the bottom of the membrane module; the aerating gas inlet (10) is disposed at one or both ends of the hollow aerating shaft (1); and the protective net (11) covers the periphery of the membrane module and thus separates the hollow fiber membrane (4) from outside; and the shaft type submergible hollow fiber membrane further comprises a produced-water communicating tube (3) which is opened at both ends, wherein the produced-water communicating tube (3), the hollow fiber membranes (4), the hollow aerating shaft (1), the upper end head (5), the lower end head (6) and the adhesive material (12) are fixed together; **characterized in that** the aerating head (2) has a shape of central annulus with two or more radial aerating branch tubes disposed thereon; and the peripheral size of the aerating head (2) is equivalent to the outer diameter of the upper end head (5) or the lower end head (6).

2. The shaft type submergible hollow fiber membrane module of claim 1, wherein the hollow aerating shaft (1), opened at one or both ends, is disposed along the central axis of the membrane module.

3. The shaft type submergible hollow fiber membrane module of claim 1,
wherein when there are two or more aerating heads (2), one of them is disposed around the hollow aerating shaft (1), facing the exposed part of the hollow membrane filaments near the lower end head (6), and the rest are distributed along the hollow aerating shaft (1) at a constant spacing.

4. The shaft type submergible hollow fiber membrane module of claim 1, wherein there is only one produced-water communicating tube (3) which is provided outside the hollow aerating shaft (1) to be in coaxial; and when there are more produced-water communicating tubes (3), one of them is provided outside the hollow aerating shaft (1), and the rest are distributed uniformly around the hollow aerating shaft (1), or all of them are distributed uniformly around the hollow aerating shaft (1).

5. The shaft type submergible hollow fiber membrane module of claim 1, wherein the two ends of the hollow fiber membrane (4) are fixed on the upper end head 5 and the lower end head 6, respectively, and the hollow channel of the hollow fiber membrane (4) is open at both ends.

6. The shaft type submergible hollow fiber membrane module of claim 1, wherein the protective net (11) is made of a material selected from the group consisting of metallic material, inorganic material and organic material.

7. The shaft type submergible hollow fiber membrane module of claim 6, wherein the protective net (11) is made of a material selected from the group consisting of stainless steel, nitrilon, nylon and ceramic.

8. A filter comprising a shaft type submergible hollow fiber membrane module according to any one of claims 1-7.

## Patentansprüche

1. Wellenartiges tauchfähiges Hohlfasermembranmodul, wobei das Membranmodul eine zylindrische Struktur aufweist und eine hohle Belüftungswelle (1), einen Belüftungskopf (2), Hohlfasermembranen (4), einen Kopf (5) am oberen Ende, einen Kopf (6) am unteren Ende, eine Kappe (7) am oberen Ende, eine Kappe (8) am unteren Ende, eine wassererzeugende Öffnung (9), einen Belüftungsgaseinlass (10), ein Schutznetz (11) und Haftmaterial (12) umfasst; wobei es lediglich einen Belüftungskopf (2) gibt, der um die hohle Belüftungswelle (1) herum angeordnet ist und zu dem freigelegten Teil der Filamente der Hohlmembran nahe dem Kopf (6) am unteren Ende zeigt; wobei die wasserproduzierende Öffnung (9) an der Spitze und am Boden des Membranmoduls angeordnet ist; wobei der Belüftungsgaseinlass (10) an einem oder beiden Enden der hohlen Belüftungswelle (1) angeordnet ist ; und das Schutznetz (11) die Peripherie des Membranmoduls bedeckt und somit die Hohlfasermembran (4) von außen abtrennt; und die wellenartige tauchfähige Hohlfasermembran weiter ein Verbindungsrohr (3) für erzeugtes Wasser umfasst, das an beiden Enden geöffnet ist, wobei das Verbindungsrohr (3) für erzeugtes Wasser, die Hohlfasermembranen (4), die hohle Belüftungswelle (1), der Kopf (5) am oberen Ende, der Kopf (6) am unteren Ende und das Haftmaterial (12) aneinander befestigt sind; **dadurch gekennzeichnet, dass** der Belüftungskopf (2) eine Form eines zentralen Ringkranzes mit zwei oder mehr darauf angeordneten radialen Belüftungszweigrohren aufweist; und die periphere Größe des Belüftungskopfs (2) äquivalent zu dem äußeren Durchmesser des Kopfs (5) am oberen Ende oder des Kopfs (6) am unteren Ende ist.

2. Wellenartiges tauchfähiges Hohlfasermembranmodul nach Anspruch 1, wobei die hohle Belüftungswelle (1), die an einem oder beiden Enden geöffnet ist, entlang der Mittelachse des Membranmoduls angeordnet ist.

3. Wellenartiges tauchfähiges Hohlfasermembranmodul nach Anspruch 1, wobei wenn es zwei oder mehr Belüftungsköpfe (2) gibt, einer von ihnen um die hohle Belüftungswelle (1) herum angeordnet ist und zu dem freigelegten Teil der Filamente der Hohlmembran nahe dem Kopf (6) am unteren Ende zeigt, und die anderen mit einer konstanten Beabstandung über die hohle Belüftungswelle (1) verteilt sind.

4. Wellenartiges tauchfähiges Hohlfasermembranmodul nach Anspruch 1, wobei es lediglich ein Verbindungsrohr (3) für erzeugtes Wasser gibt, das außerhalb der hohlen Belüftungswelle (1) bereitgestellt ist, um koaxial zu sein, und wenn es mehrere Verbindungsrohre (3) für erzeugtes Wasser gibt, eines von ihnen außerhalb der hohlen Belüftungswelle (1) bereitgestellt ist, und die anderen einheitlich um die hohle Belüftungswelle (1) herum verteilt sind, oder alle von ihnen einheitlich um die hohle Belüftungswelle (1) herum verteilt sind.

5. Wellenartiges tauchfähiges Hohlfasermembranmodul nach Anspruch 1, wobei die zwei Enden der Hohlfasermembran (4) jeweils an dem Kopf 5 am oberen Ende und dem Kopf 6 am unteren Ende befestigt sind, und der hohle Kanal der Hohlfasermembran (4) an beiden Enden offen ist.

6. Wellenartiges tauchfähiges Hohlfasermembranmodul nach Anspruch 1, wobei das Schutznetz (11) aus einem Material hergestellt ist, das ausgewählt ist aus der Gruppe, bestehend aus metallischem Material, anorganischem Material und organischem Material.

7. Wellenartiges tauchfähiges Hohlfasermembranmodul nach Anspruch 6, wobei das Schutznetz (11) aus einem Material hergestellt ist, das ausgewählt ist aus der Gruppe, bestehend aus Edelstahl, Nitrilon, Nylon und Keramik.

8. Filter, umfassend ein wellenartiges tauchfähiges Hohlfasermembranmodul nach einem der Ansprüche 1-7.

## Revendications

1. Module de membrane à fibres creuses submersible de type arbre, ledit module de membrane ayant une structure cylindrique et comprenant un arbre d'aération creux (1), une tête d'aération (2), des membranes à fibres creuses (4), une tête d'extrémité supérieure (5), une tête d'extrémité inférieure (6), un capuchon d'extrémité supérieure (7), un capuchon d'extrémité inférieure (8), une ouverture de production d'eau (9), un orifice d'entrée de gaz d'aération (10), un filet protecteur (11) et un matériau adhésif (12) ; seule une tête d'aération (2) est disposée autour de l'arbre d'aération creux (1), faisant face à la partie exposée des filaments de membrane creuse près de la tête d'extrémité inférieure (6) ; l'ouverture de production d'eau (9) est disposée en haut et en bas du module de membrane; l'orifice d'entrée de gaz d'aération (10) est disposé au niveau d'une ou des deux extrémités de l'arbre d'aération creux (1) ; et le filet protecteur (11) couvre la périphérie du module de membrane et sépare ainsi la membrane à fibres creuses (4) de l'extérieur ; et la membrane à fibres creuses submersible de type arbre comprend en outre un tube de communication d'eau produite (3) qui est ouvert au niveau des deux extrémités, dans lequel le tube de communication d'eau produite (3), les membranes à fibres creuses (4), l'arbre d'aération creux (1), la tête d'extrémité supérieure (5), la tête d'extrémité inférieure (6) et le matériau adhésif (12) sont fixés ensemble ; **caractérisé en ce que** la tête d'aération (2) a une forme d'un annulaire central avec deux tubes de dérivation d'aération radiaux ou plus disposés dessus ; et la taille périphérique de la tête d'aération (2) est équivalente au diamètre externe de la tête d'extrémité supérieure (5) ou de la tête d'extrémité inférieure (6).

2. Module de membrane à fibres creuses submersible de type arbre selon la revendication 1,
dans lequel l'arbre d'aération creux (1), ouvert au niveau d'une ou des deux extrémités, est disposé le long de l'axe central du module de membrane.

3. Module de membrane à fibres creuses submersible de type arbre selon la revendication 1,
dans lequel lorsqu'il y a deux têtes d'aération (2) ou plus, l'une d'elles est disposée autour de l'arbre d'aération creux (1), faisant face à la partie exposée des filaments de membrane creuse près de la tête d'extrémité inférieure (6), et le reste est réparti le long de l'arbre d'aération creux (1) à un espacement constant.

4. Module de membrane à fibres creuses submersible de type arbre selon la revendication 1,
dans lequel seul un tube de communication d'eau produite (3) est prévu à l'extérieur de l'arbre d'aération creux (1) pour être en coaxial ; et lorsqu'il y a plus de tubes de communication d'eau produite (3), l'un d'eux est prévu à l'extérieur de l'arbre d'aération creux (1), et le reste est réparti uniformément autour de l'arbre d'aération creux (1), ou la totalité d'entre eux est répartie uniformément autour de l'arbre d'aération creux (1).

5. Module de membrane à fibres creuses submersible de type arbre selon la revendication 1,
dans lequel les deux extrémités de la membrane à fibres creuses (4) sont fixées sur la tête d'extrémité supérieure 5 et la tête d'extrémité inférieure 6, respectivement, et le canal creux de la membrane à fibres creuses (4) est ouvert au niveau des deux extrémités.

6. Module de membrane à fibres creuses submersible de type arbre selon la revendication 1,
dans lequel le filet protecteur (11) est réalisé en un matériau choisi dans le groupe constitué d'un matériau métallique, d'un matériau inorganique et d'un matériau organique.

7. Module de membrane à fibres creuses submersible de type arbre selon la revendication 6,
dans lequel le filet protecteur (11) est réalisé en un matériau choisi dans le groupe constitué d'acier inoxydable, de nitrilon, de nylon et de céramique.

8. Filtre comprenant un module de membrane à fibres creuses submersible de type arbre selon l'une quelconque des revendications 1 à 7.
